# EUROPEAN PATENT APPLICATION

(11) **EP 4 567 449 A1**
(43) Date of publication of application: **11.06.2025**
(21) Application number: 23215385.8
(22) Date of filing: 08.12.2023
(51) Int. Cl.: G01S 7/00, G01S 7/03, G01S 13/58, G01S 13/87, G01S 13/931

(54) **A RADAR SYSTEM**

(71) Applicant: NXP B.V., 5656 AG Eindhoven (NL)
(72) Inventor: Jansen, Feike Guus, 5656 AG Eindhoven (NL); Steigemann, Mark, 5656 AG Eindhoven (NL); Bekooij, Marco Jan Gerrit, 5656 Eindhoven (NL); Klaassen, Marc, 5656 AG Eindhoven (NL)
(74) Representative: Hardingham, Christopher Mark

(57) **Abstract**

A radar system comprising: three transceivers wherein each transceiver is arranged to transmit output radar signals and receive reflected radar signals; the three transceivers are arranged in series such that at least a second transceiver of the three transceivers is communicatively coupled to a first transceiver and a third transceiver of the three transceivers, wherein the transceivers are arranged in a ring topology such that each transceiver is coupled in series to two neighbouring transceivers, and each transceiver comprises an embedded processor configured to perform signal processing tasks on received reflected radar signals; and an external processor communicatively coupled to at least one of the three transceivers wherein the at least one coupled transceiver is configured to transmit data to the external processor and wherein the external processor is configured to perform signal processing operations on the received data.

## Description

### Field

The present disclosure relates to a radar system and an automotive vehicle comprising the radar system.

### Summary

According to a first aspect of the present disclosure, there is provided a radar system comprising: three transceivers wherein each transceiver is arranged to transmit output radar signals and receive reflected radar signals; the three transceivers are arranged in series such that at least a second transceiver of the three transceivers is communicatively coupled to a first transceiver and a third transceiver of the three transceivers, wherein the transceivers are arranged in a ring topology such that each transceiver is coupled in series to two neighbouring transceivers, and each transceiver comprises an embedded processor configured to perform signal processing tasks on received reflected radar signals; and an external processor communicatively coupled to at least one of the three transceivers wherein the at least one coupled transceiver is configured to transmit data to the external processor and wherein the external processor is configured to perform signal processing operations on the received data.

In one or more embodiments, each transceiver may be configured to distribute data to one of its neighbouring serially coupled transceivers. In one or more embodiments, the transceivers may be configured distribute data in a first direction through the serially coupled arrangement of transceivers.

In one or more embodiments, the each transceiver may be configured to distribute data to each of its neighbouring serially coupled transceivers. In one or more embodiments, the transceivers may each be configured to distribute data in a first direction or a second direction through the serially coupled arrangement of transceivers.

In one or more embodiments, each transceiver may be configured to, upon receiving a reflected radar signal: perform signal processing to obtain a distance spectrum corresponding to the reflected radar signal; and divide the obtained distance spectrum into a plurality of distance spectrum segments where each distance spectrum segment is representative of a range interval of the total range of the reflected radar signal, wherein the distance spectrum segments are a type of data which the transceivers are configured to distribute.

In one or more embodiments, each transceiver may be configured to retain at least one distance spectrum segment originating from each transceiver of the radar system wherein the distance spectrum segments retained by a given transceiver correspond to a same range interval.

In one or more embodiments, data may be transferred on a waveform-by-waveform basis during a coherent processing interval, CPI. In one or more embodiments, data may be transferred as soon as a single waveform has been processed. The transfer of data during the CPI allows for reduced latency to be achieved. As a result of this process, a short time after reception of the last waveform, all data resides in the correct device. Because the time for data sharing is similar to the time in which the received signals come in from the antennas the digital interface peak data rate is comparable to the ADC output data rate.

In one or more embodiments, data may be transferred distance gate by distance gate once a coherent processing interval has been completed.

In one or more embodiments, after a given transceiver has retained the distance spectrum segments of a same range interval from each of the transceivers, the transceiver may be configured to perform on the distance spectrum segments one or more of:
a windowing operation;
a Fourier transform in the Doppler dimension;
peak detection;
signal to noise ratio estimation;
velocity ambiguity resolving; and
MIMO processing
in order to provide peak list information and a direction of arrival, DoA, snapshot.
The output from each transceiver may be a peak list with distance and relative radial velocity to the target plus the complex valued data from each transmit receive antenna combination corresponding to the target itself - this is the direction of arrival snapshot. The DoA snapshot may be enhanced by applying an antenna calibration.

In one or more embodiments, the at least one transceiver which is coupled to the external processor may be configured to provide its associated peak list information and DoA snapshot to the external processor and wherein the external processor may be configured to subsequently perform direction of arrival estimation using the provided peak list information and DoA snapshot.

In one or more embodiments, the direction of arrival estimation may comprise performing one or both of matrix inversion and matrix decomposition processing steps.

In one or more embodiments, the transceivers which are not coupled to the external processor may be configured to provide their respective peak list information and DoA snapshots to the transceiver which is coupled to the external processor and wherein the transceiver which is coupled to the processor may be configured to: aggregate the peak list information into an aggregated peak list; aggregate the DoA snapshot information into an aggregated DoA snapshot; andprovide the aggregated peak list and aggregated DoA snapshot to the external processor; and wherein the external processor is configured to perform direction of arrival estimation using the aggregated peak list and aggregated DoA snapshot.

In one or more embodiments, the external processor may be a first external processor of a plurality of external processors, the plurality of external processors comprising an external processor for each transceiver of the radar system, wherein each transceiver is configured to provide its peak list information and DoA snapshot to its corresponding external processor and wherein each external processor is configured to subsequently perform direction of arrival estimation using the provided peak list information and DoA snapshot.

In one or more embodiments, each transceiver may be a cube transceiver and may comprise digital processing circuitry and an embedded memory.

In one or more embodiments, the cube transceivers may be integrated into a multi-chip-module, MCM, and the communicatively coupled transceivers are coupled via launchers on a substrate of the MCM.

According to a second aspect of the present disclosure, there is provided a vehicle comprising the radar system of any preceding claim.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a radar system according to the present disclosure;
Figure 2 shows an alternative example embodiment of a radar system of the present disclosure;
Figure 3 shows an example embodiment of how data may be transferred between transceivers in a radar system according to the present disclosure; and
Figure 4 shows an example embodiment of a radar system comprising an external processor according to the present disclosure;
Figure 5 shows an alternative example embodiment of a radar system comprising an external processor according to the present disclosure; and
Figure 6 shows an example automotive vehicle comprising a radar system of the present disclosure.

### Detailed Description

New automotive radar applications require radars to separate objects in the direction of arrival dimension with ever better resolution. The direction of arrival resolution is determined by the number of antennas, the array aperture and the digital signal processing method. However, typical automotive radar transceiver products offer a limited number of transmit and receive channels per integrated circuit (IC). This number is insufficient to meet the requirements of sub-1-degree angular separation. The number of antennas can be extended by cascading multiple transceiver ICs. Sharing a common clock, measurement trigger and local oscillator signal allows these transceivers to operate in a coherent fashion. The received signals from each transceiver are downconverted to baseband, digitized and provided to a digital processor. This requires a multitude of interfaces on the processor side. The number of interfaces limits the number of transceivers that can be connected without the use of special switch or hub products.

Contrary to the described functional partitioning into predominantly analog transceiver and digital processor technology, a new partitioning is gaining popularity. In these so-called one-chip systems the anolog transceiver circuity is combined with digital processing circuitry. As a consequence, such a device only has access to the signals received via antennas connected to this device.

Prior solutions fall short when more than two devices are cascaded because of complex data interfaces or when powerful direction of arrival (DoA) estimation algorithms are used because of a shortage of compute power. A one-chip device is designed with a limited number of antennas in mind. Therefore, compute power is optimized to process only data from directly connected antennas. When the number of antennas is increased via cascading the processing power will not be sufficient.

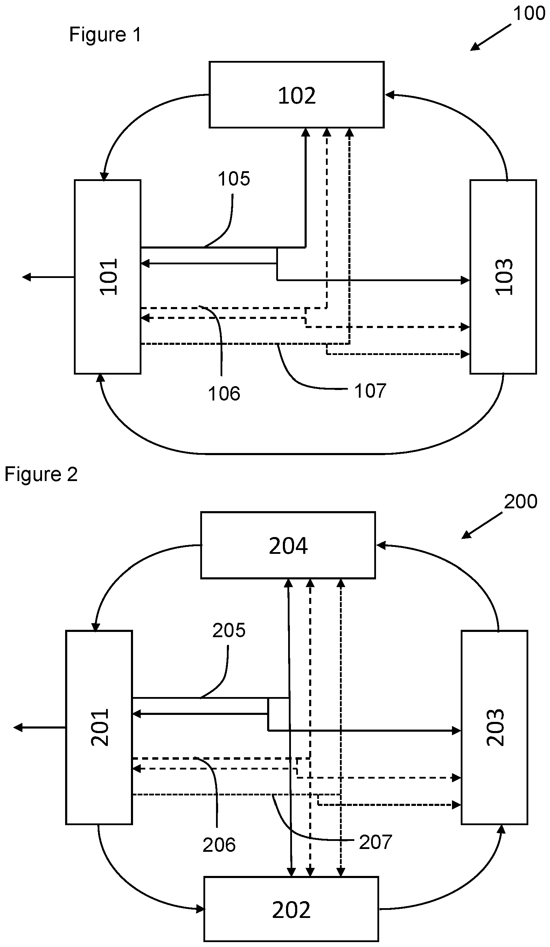

Figure 1 shows an example radar system 100 which comprises three transceivers, 101 - 103 arranged in series in a ring topology such that each of the transceivers is serially coupled to the other two transceivers in the ring. The radar system 100 may be an automotive radar system which is configured to be incorporated into an automotive vehicle. Automotive applications in particular require solutions that one or both of minimize additional IC area and power consumption. The present disclosure provides for these advantages.

An automotive radar system 100 as disclosed in one or more embodiments herein may be incorporated into any suitable automotive vehicle such as a car, a van, a lorry, a bus, a construction vehicle or any other vehicle which may share a road which other vehicles are traversing. The automotive radar system 100 may further be used in vehicles which do not use roads but that might have other obstacles that need to be navigated, such as boats or ships.

The radar system 100 may comprise at least three transceivers 101 - 103 but, in some embodiments, may comprise more transceivers. Certain signal processing operations required to estimate a Direction of Arrival, DoA, of a reflected radar signal scale nonlinearly with the number of transceivers involved. As such, the present radar system addresses the challenges that arise when the number of cascaded transceivers is greater than two.

In one or more embodiments in which the radar system 100 comprises three transceivers 101 - 103, at least the second transceivers 102 of the three transceivers 101 - 103 may be communicatively coupled to a first transceiver 101 and a third transceiver 103 of the plurality of transceivers. Where the system comprises only three transceivers 101 - 103, the first transceiver 101 may be coupled to the second transceiver 102 and the third transceiver 103.

More generally, the plurality of transceivers of the radar system 100 may be configured in an closed ring arrangement each transceiver is serially communicatively coupled to two other transceivers.

It will be appreciated that, herein, the communicative coupling of the transceivers 101 - 103 refers to the ability of communicatively coupled transceivers 101 - 103 to pass data therebetween. The serial connection of the transceivers 101 - 103 refers to the chain-like connection of the transceivers 101 - 103 such that the transceivers 101 - 103 are not coupled to one-another in a parallel arrangement.

Each transceiver 101 - 103 of the radar system is configured to transmit output radar signals and receive reflected radar signals. To this end, each transceiver may comprise one or more transmitters and one or more receivers. In other examples, each transceiver 101 - 103 may comprise one or more individual components configured to both transmit and receive signalling. The transmitted and received radar signals may comprise: frequency chirps used in frequency modulated continuous wave radar; radar pulses used in pulsed Doppler radar; frequency chirps used in stepped frequency continuous wave radar or any other appropriate radar signals for any other appropriate radar technique.

Each transceiver 101 - 103 of the present disclosure comprises an embedded processor configured to perform signal processing tasks on received reflected radar signals. In one or more embodiments, each transceiver 101 - 103 may be a transceiver device which comprises analog radar transceiver as an embedded processor and an embedded memory. A Cube transceiver may be one example of such a transceiver wherein a cube transceiver is a transceiver which contains analog radar transceiver circuitry, digital processing circuitry and an embedded memory. The transceivers 101 - 103, such as the cube transceivers, may be integrated into a multi-chip-module (MCM) and the communicative coupling of the transceivers 101 - 103 may be provided via launchers on the substrate of the MCM. This may avoid having to realise the cube transceivers with antenna interfaces at varying positions. One of the transceivers 101 of the plurality of transceivers 101 - 103 may be a lead, or master, transceiver. As shown in figure 1, each transceiver 101 - 103 may share a local oscillator 105, system clock 106 and measurement trigger signals 107 from the lead transceiver 101 of the plurality of transceivers 101 - 103. In such embodiments, the Local Oscillator (LO) distribution network 105 and the clock distribution network 106 have equal PCB trace lengths and the LO and clock signals 105, 106 are fed back to the leader device using lines that equalize the length difference between their leader outputs and the division network to the lengths leading up to the individual follower devices. The non-lead transceivers 102, 103 may be referred to as follower or slave transceivers.

At least one of the transceivers 101 may be configured to be communicatively coupled to an external processor (not shown) wherein the at least one coupled transceiver 101 is configured to transmit data to the external processor for signalling processing operations to be performed on the received data. The external processor is external to the embedded processors that comprise part of the transceivers. The external processor comprises part of the radar system 100. The radar system may be defined as only the electronics or other module that handles the radar signals specifically or the radar system may comprise additional components such as the processor of an automotive vehicle, which may take the role of the external processor in this case. In this way, the external processor may be arranged proximate to the other radar components or it may be located separately to the other radar components. In the embodiment of figure 1, the external processor is separate from transceivers of the radar system. For example, at least one of the transceivers 101 of an automotive radar system 100 may be configured to be communicatively coupled to an external processor of the automobile, such as a car's central processor. The data transmitted to the external processor is provided for signal processing operations to be performed thereon by the external processor. The external processor is configured to perform the signal processing operations on the received data. In one or more embodiments, more than a single transceiver may be configured to transmit data to the external processor. In other examples, the single transceiver 101 that communicatively coupled to the external processor may be configured to receive and aggregate data from the other transceivers of the plurality of transceivers and provide that aggregated data to the external processor for further signal processing operations to be performed thereon.

Figure 2 shows an alternative example embodiment of the radar system 200 comprising four transceivers 201 - 204 arranged in a closed-ring topology. Similarly to the embodiment represented in Figure 1, each of the transceivers 201 - 204 may share a local oscillator 204, system clock 205 and measurement trigger signals 206 from the lead transceiver 201 of the plurality of transceivers 201 - 204.

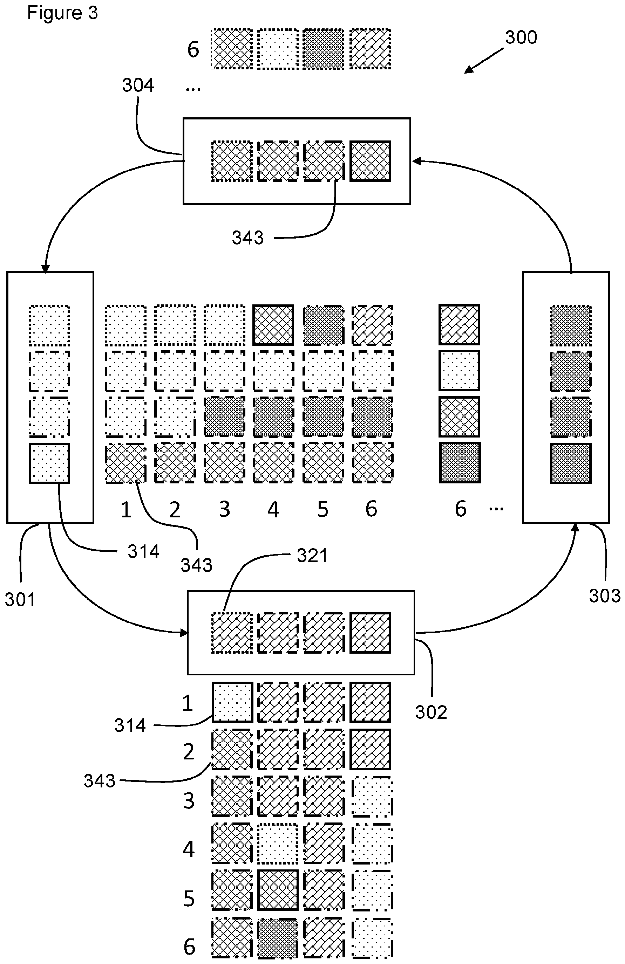

Figure 3 provides a demonstration of the data distribution which can occur in a radar system 300 four transceivers 301 - 304 arranged in a closed-ring topology. It will be appreciated that three or more transceivers may be used in a closed loop topology in practice. In this example, each transceiver 301 - 304 is configured to distribute data to one of its neighbouring serially coupled transceivers 301 - 304. In the embodiment of figure 3, the data distribution is performed in a single direction around the loop (uni-directional distribution). That is, the transceivers 301 - 304 are configured to distribute data in a first direction through the serially coupled plurality of transceivers 301 - 304. It is also possible, however, to provide for bi-directional data transfer between transceivers. That is, the transceivers may be configured to distribute data in either a first direction or a second direction through the serially coupled arrangement of transceivers 301 - 304. Bi-directional data distribution may be more convenient and allow for particular combinations of data to be transferred to specific transceivers 301 - 304 using fewer data transfer operations than uni-directional data distribution.

Upon receiving a reflected radar signal, each transceiver 301 - 304 may be configured to perform signal processing to obtain a distance spectrum corresponding to the reflected radar signal. The distance spectrum is represented as generated data may be stored by the transceiver 301 - 304 after the signal processing steps have been performed. The distance spectrum data comprises information indicative of any reflectors from which the output radar signals were reflected in order to represent the reflected radar signals across the whole available range (distance) at which the radar system can operate. It will be appreciated that any radar system comprises a maximum practical range at which reflected radar signals can be usefully detected and processed.

Each transceiver 301 - 304 may be further configured to divide its respective obtained distance spectrum into a plurality of distance spectrum segments where each distance spectrum segment is representative of a range interval of the total range of the reflected radar signal. As for the distance spectrum as a whole, the distance spectrum segments are a type of data which the transceivers 301 - 304 may be configured to distribute between one-another and, where appropriately coupled, to the external processor. The methods behind separating a distance spectrum into distance spectrum segments are known to a person skilled in the art and will not be discussed further herein.

In radar systems such as those disclosed herein, it may be particularly beneficial to perform certain signal processing operations on all data pertaining to a particular segment of the total (practical) radar range. As such, the distribution of data between the transceivers may allow for all of the data pertaining to a given range increment to be collected on a single transceiver, thereby allowing each transceiver to handle the data corresponding to one of the plurality of range increments.

Figure 3 represents data received at a particular transceiver 301 - 304 as having a same fill-effect. As such, the data received at the first transceiver 301 has a dotted-fill effect, the data received at the second transceiver 302 has a brick-fill, the data received at the third transceiver 303 has a dense-hash-fill and the data received at the fourth transceiver 304 has a sparse-hatch effect. These received data are shown within the boxes that represent the transceivers for ease of depiction. In this example, the total range of the radar system is separated into four range increments, although it will be appreciated that different numbers of range increments may be used. The range increment to which a particular block of data belongs is denoted by the patterning of its outline. As such, a first range increment is denoted by a dotted-outline, a second range increment is denoted by a dashed-outline, a third range increment is denoted by a dash-double-dotted-outline and the fourth range increment is denoted by a solid-outline.

Data may be distributed between the transceivers 301 - 304 at substantially similar times so that the number of data blocks stored on a particular transceiver is substantially consistent. In this case, the number of data blocks on a particular transceiver is consistently four data blocks. Using this approach allows the available memory on each transceiver to be kept to a minimum, thereby allowing for smaller devices to be utilised. It will be appreciated, however, that this does not necessarily need to be the case and, instead, the data may be transferred at different times such that, at times, five or more data blocks may be stored on a particular transceiver in the present example.

The manner in which data is distributed between the transceivers 301 - 304 is demonstrated in figure 1 by representing the steps which are taken to obtain all data of a particular range increment on each transceiver 301 - 304. The final step in the data-distribution process is represented by the data blocks listed next to the number "6" for each transceiver. The first and second transceivers show all six data distribution steps used to reach the final stage. That is, it shows the data stored on the first or second transceiver 301, 302 after the first-through-sixth data transfers. In the example shown in figure 3, the data is being distributed uni-directionally around the closed-loop topology. For the purpose of this illustration, the data is transferred anticlockwise around the loop. For example, in the first step, the first transceiver 301 distributes the data block pertaining to its fourth range increment 314 to the second transceiver 304 while the data block pertaining to the second transceiver's first range increment 321 is passed to the third transceiver 303: this can be seen as the dot-filled, sold-outlined data block 314 moves from the first transceiver 301 to the second transceiver 302 at the step "1" of the second transceiver 302. To make room for this data block 314, the second transceiver's first range increment data block 321, denoted as the brick-filled, dot-outlined data block 321 is transferred away to the third transceiver 303 (not shown on the third transceiver 303, since the only the sixth and final step is shown for the third and fourth transceivers 303, 304). In the first step, the first transceiver 301 receives the data block corresponding to the fourth transceiver's third range increment 343, as shown at step "1" of the first transceiver 301. In this case, after six data distribution steps, each transceiver 301 - 304 has received and retained all of the data corresponding to a particular range increment. It should be appreciated that, herein, the data is referred to as "blocks" merely for ease of representation and that the data may be stored, processed and distributed in any appropriate manner that corresponds to the schematic presentation outlined above.

In one or more embodiments, the data is transferred on a waveform-by-waveform basis during a coherent processing interval (CPI). That is, in the first schedule, which may be a preferred schedule, data is transferred as soon as a single waveform has been processed as outlined above. Because data is transferred during the CPI, minimal latency is achieved. Only a short time after reception of the last waveform is required before all data resides in the correct transceiver. Because the time for data sharing is similar to the time in which the received signals come in from the antennas, the digital interface peak data rate is comparable to an analog-digital-converter (ADC) output data rate.

In one or more alternative embodiments, the data may be transferred distance gate by distance gate once a coherent processing interval has been completed.

After a given transceiver 301 - 304 has retained the distance spectrum segments of a same range interval from each of the transceivers 301 - 304 and from all of the transmitted radar signals (waveforms), the transceiver is configured to perform on the distance spectrum segments stored thereon one or more of: a windowing operation, a Fourier transform in the Doppler dimension; peak detection; signal-to-noise estimation; velocity ambiguity resolving; and MIMO processing. The one or more listed operations are performed in order to provide peak list information and a direction of arrival (DoA) snapshot at the transceiver for the range segment to which its retained data corresponds. The output from each transceiver 301 - 304 is a peak list with distance and relative radial velocity to the target plus the complex valued data from each transmit-receive antenna combination corresponding to the target itself - this is the so-called DoA snapshot. The DoA snapshot can be enhanced by applying antenna calibration techniques. Additional meta data such signal-to-noise ratios (SNR), noise power, confidence and other parameters may also be shared between transceivers.

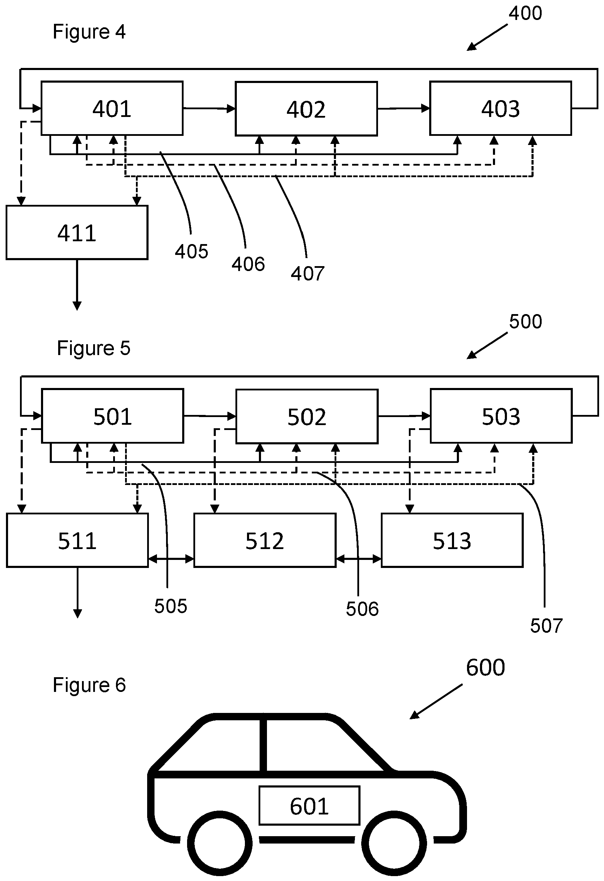

Figure 4 shows an embodiment of the radar system 400 wherein one of the transceivers 401, which may be a leader or master transceiver, is communicatively coupled to the external processor 411. The transceiver 401 which is coupled to the external processor 411 may be configured to provide its associated peak list information and DoA snapshot to the external processor 411. The external processor 411 may be configured to perform direction of arrival estimation using the provided peak list information and the DoA snapshot received from the coupled transceiver 401. The direction of arrival estimation may comprise performing one or both of matrix inversion and matrix decomposition processing steps. While DoA estimation is a known technique, and so will not be discussed in further detail herein, the provision of performing this operation on the external processor 411 provides a particular advantage of not overburdening the transceiver 401 and, further, allows for smaller transceivers 401 - 403 to be used.

In one or more embodiments, the transceivers 402, 403 which are not coupled to the external processor 411 may be configured to provide their respective peak list information and DoA snapshots to the transceiver 401 which is coupled to the external processor 411. The transceiver 401 which is coupled to the external processor 411 may be configured to: aggregate the peak list information into an aggregated peak list; aggregate the DoA snapshot information into an aggregated DoA snapshot; and provide the aggregated peak list and aggregated DoA snapshot to the external processor 411. The external processor 411 may be configured to perform direction of arrival estimation using the aggregated peak list and aggregated DoA snapshot.

Figure 5 shows an alternative embodiment according to the present disclosure wherein the external processor 511 is a first external processor 511 of a plurality of external processors 511, 512, 513. The plurality of external processors 511 - 513 may comprise an external processor 511 - 513 for each transceiver 501 - 503 of the radar system 500, wherein each transceiver 501 - 503 is configured to provide its peak list information and DoA snapshot to its corresponding external processor 511 - 513. Each external processor 511 - 513 may be configured to subsequently perform direction of arrival estimation using the provided peak list information and DoA snapshot. Each external processor 511 - 513 may be communicatively coupled to at least one of the other external processors such that the external processors 511 - 513 are arranged in series. In this way, the external processors 511 - 513 may be configured to share their respective direction of arrival estimations with each other. One of the external processors 511 may be configured to aggregate the distance of arrival estimations. Further, the external processor 511 which aggregates, otherwise collates, the distance of arrival estimations may be configured to provide the distance of arrival information to a separate device (not shown), such as the processor of an automotive vehicle.

In general, in the present disclosure, the or each external processors may comprise vector floating point digital signal processors. The or each external processor may be a generic processor, as the transceivers and their embedded processors may be configured to perform the radar specific acceleration of processing steps.

The embodiment of figure 5 may be particularly beneficial in some examples because the load imparted by the processing steps do not scale linearly with the number of transceivers 501 - 513. As such, a single external processor 511 may not be sufficient. In this case, connecting multiple external processors 511 - 513 means that there is no need to share peak list information and DoA snapshot information to a single transceiver 501. Instead, each cube transceiver 501 - 503 sends its data directly to a dedicated external processor 511 - 513. In one or more embodiments, the number of external processors may be different from the number of transceivers.

Prior to processing, it is not known how many reflectors are located in the distance to the reflector range associated with each range segment. As such, an external processor 511 - 513 may be confronted with few peaks on which DoA estimation has to be executed while another external processor 511 - 513 may be overloaded. In order to handle this, the communicative coupling of external processors 511 - 513 may also be provided in order to allow for the external processors to engage in load-balancing. Thus, the external processors 511 - 513 may be configured to perform load-balancing operations between themselves.

Figures 4 and 5 also show the connection of the local oscillator interface 405, 505 the clock interface 406, 506 and the measurement trigger interface 407, 507 between the transceivers.

The present disclosure allows for a same transceiver to be used for different applications ranging from corner radar, advanced corner radar and imaging radars. The transceiver can be equipped with hardware accelerators, such as SPTs (NXP signal processing toolboxes). Rather than designing a new accelerator for each application, a single design is reuse for all applications. A similar approach can be applied to the processor. Instead of using a single processor embedded into a transceiver, multiple smaller processors can be used. The quantity of processors can vary with the requirements of a given application.

Figure 6 shows an example automotive vehicle 600 which comprises the radar system 601 as previously disclosed. While figure 6 depicts a car 600, it will be appreciated that the vehicle may be any automotive vehicle which can benefit from an installed radar system.

The instructions and/or flowchart steps in any of the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A radar system comprising:
three transceivers wherein
each transceiver is arranged to transmit output radar signals and receive reflected radar signals;
the three transceivers are arranged in series such that at least a second transceiver of the three transceivers is communicatively coupled to a first transceiver and a third transceiver of the three transceivers, wherein the transceivers are arranged in a ring topology such that each transceiver is coupled in series to two neighbouring transceivers, and
each transceiver comprises an embedded processor configured to perform signal processing tasks on received reflected radar signals; and
an external processor communicatively coupled to at least one of the three transceivers wherein the at least one coupled transceiver is configured to transmit data to the external processor and wherein the external processor is configured to perform signal processing operations on the received data.

2. The radar system of claim 1 wherein each transceiver is configured to distribute data to one of its neighbouring serially coupled transceivers.

3. The radar system of claim 2 wherein each transceiver is configured to distribute data to each of its neighbouring serially coupled transceivers.

4. The radar system of claim 2 or claim 3 wherein each transceiver is configured to, upon receiving a reflected radar signal:
perform signal processing to obtain a distance spectrum corresponding to the reflected radar signal; and
divide the obtained distance spectrum into a plurality of distance spectrum segments where each distance spectrum segment is representative of a range interval of the total range of the reflected radar signal, wherein the distance spectrum segments are a type of data which the transceivers are configured to distribute.

5. The radar system of claim 4 wherein each transceiver is configured to retain at least one distance spectrum segment originating from each transceiver of the radar system wherein the distance spectrum segments retained by a given transceiver correspond to a same range interval.

6. The radar system of any of claims 2 - 5 wherein data is transferred on a waveform-by-waveform basis during a coherent processing interval, CPI.

7. The radar system of any of claims 2-5 wherein data is transferred distance gate by distance gate once a coherent processing interval has been completed.

8. The radar system of any of claims 5-7 wherein, after a given transceiver has retained the distance spectrum segments of a same range interval from each of the transceivers, the transceiver is configured to perform on the distance spectrum segments one or more of:
a windowing operation;
a Fourier transform in the Doppler dimension;
peak detection;
signal to noise ratio estimation;
velocity ambiguity resolving; and
MIMO processing
in order to provide peak list information and a direction of arrival, DoA, snapshot.

9. The radar system of any preceding claim wherein the at least one transceiver which is coupled to the external processor is configured to provide its associated peak list information and DoA snapshot to the external processor and wherein the external processor is configured to subsequently perform direction of arrival estimation using the provided peak list information and DoA snapshot.

10. The radar system of claim 9 wherein the transceivers which are not coupled to the external processor are configured to provide their respective peak list information and DoA snapshots to the transceiver which is coupled to the external processor and wherein the transceiver which is coupled to the processor is configured to:
aggregate the peak list information into an aggregated peak list;
aggregate the DoA snapshot information into an aggregated DoA snapshot; and
provide the aggregated peak list and aggregated DoA snapshot to the external processor; and
wherein the external processor is configured to perform direction of arrival estimation using the aggregated peak list and aggregated DoA snapshot.

11. The radar system of claim 9 wherein the external processor is a first external processor of a plurality of external processors, the plurality of external processors comprising an external processor for each transceiver of the radar system, wherein each transceiver is configured to provide its peak list information and DoA snapshot to its corresponding external processor and wherein each external processor is configured to subsequently perform direction of arrival estimation using the provided peak list information and DoA snapshot.

12. The radar system of any preceding claim wherein each transceiver is a cube transceiver and comprises digital processing circuitry and an embedded memory.

13. The radar system of claim 12 wherein the cube transceivers are integrated into a multi-chip-module, MCM, and the communicatively coupled transceivers are coupled via launchers on a substrate of the MCM.

14. A vehicle comprising the radar system of any preceding claim.

## Amended claims

### Amended claims in accordance with Rule 137(2) EPC.

1. A radar system comprising:
three transceivers (401, 402, 403) wherein
each transceiver is arranged to transmit output radar signals and receive reflected radar signals;
the three transceivers are arranged in series such that at least a second transceiver of the three transceivers is communicatively coupled to a first transceiver and a third transceiver of the three transceivers, wherein the transceivers are arranged in a ring topology such that each transceiver is coupled in series to two neighbouring transceivers, and
each transceiver comprises an embedded processor configured to perform signal processing tasks on received reflected radar signals; and
an external processor (411) communicatively coupled to at least one of the three transceivers wherein the at least one coupled transceiver is configured to transmit data to the external processor and wherein the external processor is configured to perform signal processing operations on the received data.

2. The radar system of claim 1 wherein each transceiver is configured to distribute data to one of its neighbouring serially coupled transceivers.

3. The radar system of claim 2 wherein each transceiver is configured to distribute data to each of its neighbouring serially coupled transceivers.

4. The radar system of claim 2 or claim 3 wherein each transceiver is configured to, upon receiving a reflected radar signal:
perform signal processing to obtain a distance spectrum corresponding to the reflected radar signal; and
divide the obtained distance spectrum into a plurality of distance spectrum segments where each distance spectrum segment is representative of a range interval of the total range of the reflected radar signal, wherein the distance spectrum segments are a type of data which the transceivers are configured to distribute.

5. The radar system of claim 4 wherein each transceiver is configured to retain at least one distance spectrum segment originating from each transceiver of the radar system wherein the distance spectrum segments retained by a given transceiver correspond to a same range interval.

6. The radar system of any of claims 2 - 5 wherein data is transferred on a waveform-by-waveform basis during a coherent processing interval, CPI.

7. The radar system of any of claims 2 - 5 wherein data is transferred distance gate by distance gate once a coherent processing interval has been completed.

8. The radar system of any of claims 5 - 7 wherein, after a given transceiver has retained the distance spectrum segments of a same range interval from each of the transceivers, the transceiver is configured to perform on the distance spectrum segments one or more of:
a windowing operation;
a Fourier transform in the Doppler dimension;
peak detection;
signal to noise ratio estimation;
velocity ambiguity resolving; and
MIMO processing
in order to provide peak list information and a direction of arrival, DoA, snapshot.

9. The radar system of any preceding claim wherein the at least one transceiver which is coupled to the external processor is configured to provide its associated peak list information and DoA snapshot to the external processor and wherein the external processor is configured to subsequently perform direction of arrival estimation using the provided peak list information and DoA snapshot.

10. The radar system of claim 9 wherein the transceivers which are not coupled to the external processor are configured to provide their respective peak list information and DoA snapshots to the transceiver which is coupled to the external processor and wherein the transceiver which is coupled to the processor is configured to:
aggregate the peak list information into an aggregated peak list;
aggregate the DoA snapshot information into an aggregated DoA snapshot; and
provide the aggregated peak list and aggregated DoA snapshot to the external processor; and
wherein the external processor is configured to perform direction of arrival estimation using the aggregated peak list and aggregated DoA snapshot.

11. The radar system of claim 9 wherein the external processor is a first external processor of a plurality of external processors, the plurality of external processors comprising an external processor for each transceiver of the radar system, wherein each transceiver is configured to provide its peak list information and DoA snapshot to its corresponding external processor and wherein each external processor is configured to subsequently perform direction of arrival estimation using the provided peak list information and DoA snapshot.

12. The radar system of any preceding claim wherein each transceiver is a cube transceiver and comprises digital processing circuitry and an embedded memory, wherein a cube transceiver is a transceiver which contains analog radar transceiver circuitry, digital processing circuitry and an embedded memory.

13. The radar system of claim 12 wherein the cube transceivers are integrated into a multi-chip-module, MCM, and the communicatively coupled transceivers are coupled via launchers on a substrate of the MCM.

14. A vehicle comprising the radar system of any preceding claim.
